(19) Europäisches Patentamt
European Patent Office
Office européen des brevets

(11) **EP 3 295 269 B1**

## (12) EUROPEAN PATENT SPECIFICATION

(45) Date of publication and mention
of the grant of the patent:
**18.03.2020 Bulletin 2020/12**

(21) Application number: **16726653.5**

(22) Date of filing: **10.05.2016**

(51) Int Cl.:
**G05D 11/13** *(2006.01)*  **B23Q 11/10** *(2006.01)*

(86) International application number:
**PCT/IB2016/052651**

(87) International publication number:
**WO 2016/181294 (17.11.2016 Gazette 2016/46)**

(54) **METHOD AND SYSTEM FOR MINIMAL CONTINUOUS-FLOW AIR-OIL LUBRICATION, WITH ELECTRONIC REGULATION AND CONTROL**

VERFAHREN UND SYSTEM ZUR MINIMALEN LUFT-ÖL-SCHMIERUNG MIT KONTINUIERLICHEM FLUSS MIT ELEKTRONISCHER REGULIERUNG UND STEUERUNG

PROCÉDÉ ET SYSTÈME DE LUBRIFICATION MINIMALE AIR-HUILE À FLUX CONTINU, AVEC UNE RÉGULATION ET UNE COMMANDE ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2015 IT MI20150673**

(43) Date of publication of application:
**21.03.2018 Bulletin 2018/12**

(73) Proprietor: **MWM Schmieranlagen S.r.L.**
**20068 Peschiera Borromeo (Milano) (IT)**

(72) Inventors:
• **MAZZONI, Maurizio**
**20135 Milano (IT)**
• **NORGIA, Michele**
**20131 Milano (IT)**

(74) Representative: **Ripamonti, Enrico et al**
**Giambrocono & C. S.p.A.**
**Via Rosolino Pilo, 19/B**
**20129 Milano (IT)**

(56) References cited:
**EP-A1- 2 333 396     DE-A1-102006 030 651**
**GB-A- 2 476 900     US-A1- 2007 107 512**

• **CHRISTIAN ZAKIAN ET AL: "Particle sizing and flow measurement using self-mixing interferometry with a laser diode", JOURNAL OF OPTICS. A, PURE AND APPLIED OPTICS, INSTITUTE OF PHYSICS PUBLISHING, BRISTOL, GB, vol. 7, no. 6, 13 May 2005 (2005-05-13), pages S445-S452, XP020093128, ISSN: 1464-4258, DOI: 10.1088/1464-4258/7/6/029**

**Description**

The subject of the present invention is a method for minimal lubrication of mechanical units in motion by means of a two-phase fluid according to the preamble of the main claim. The subject of the invention is also a system for minimal lubrication of mechanical units in motion by means of a two-phase fluid according to the preamble of the main claim.

Systems of the aforementioned type, and by means of which it is possible to implement a method as previously described, have been known for some time. For example, DE102006030651 describes a system for obtaining minimal lubrication (with nebulised oil) of a tool, comprising a nebuliser for emission of a first fluid, containing lubricant and water, within a duct where a second, transport fluid, usually air, moves. The mixture thus obtained is sent to a tool, for lubrication of its parts. The detection of the flow rate of the lubricant fluid is included and the nebulisation of this fluid is regulated by means of the flow rate information detected, so as to keep this flow rate at a predetermined value.

In particular, these known systems permit minimal lubrication, by means of a nebulised air-oil mixture, of mechanical components and elements which are subject to friction, such as, for example: ball bearings of high-speed mandrels of machine tools used in workstations, milling machines, boring machines, grinders, drills, lathe centres, and of all the rotary bearings which support high-speed rotary shafts, as well as the tools used in processes for removal of shavings. In the case of lubrication of the tools, the flow rates of the (nebulised) lubricant are in the order of millilitres per minute, so as to obtain an efficient lubrication effect. On the other hand, in the case of lubrication of mechanical units such as ball bearings, the lubricant fluid is a two-phase fluid (mixture of air and oil), wherein the oil remains in the liquid state with flow rates of microlitres per minute. In the latter case, the lubricant is present in the form of liquid streaks in pressurised ducts.

EP2333396 describes a device for minimal lubrication of tools by means of nebulised oil (not a two-phase mixture), comprising a tank for the lubricant and means to supply this lubricant under pressure to at least one modular element. The latter comprises a duct on which a flow regulator and a compressed air circuit are placed. The lubricant duct and the compressed air duct are coupled to an air-lubricant mixing element. EP2333396 does not describe any sensor for measuring the flow rate of the lubricant.

In the known systems where the lubrication is carried out with a two-phase (air-oil) fluid dosing a small volume of lubricant, this lubrication takes place cyclically over a period of time, in a continuous flow of pressurised air. Nevertheless, this procedure gives rise to discontinuity in the supply of the lubricant which, contrary to what happens in these systems, should be distributed in a minimal, continuous quantity, in order to obtain optimum lubrication of the mechanical elements with which these systems cooperate. In lubrication with a two-phase fluid, the reason for this discontinuity is associated with the difficulty of dosing small quantities of oil below the limit of 10 mm$^3$ (i.e. of 10 $\mu$l = 10 microlitres). This gives rise to the need to dilute the doses of oil so that they are smaller than this limit, in a continuous flow of compressed air, which flow has an effect of distribution and homogenisation of the quantities dosed cyclically. However, this distribution and homogenisation is associated with the length of the duct which conveys the air-oil mixture to the unit to be lubricated, which duct must therefore be sufficiently long (at least 3 m). However it is not always possible for this to be carried out.

Consequently, although the length of the piping for supply of the air-oil mixture constitutes a means for diluting and regularising the flow rate of lubricant at the point of lubrication, the lubrication procedure implemented in all of the known air-oil systems involves on the other hand a discontinuity in terms of flow of lubricant supplied at the point of lubrication. This constitutes a constraint for the high-speed performances of the unit lubricated, for example the lubricated ball bearing of the corresponding high-speed mandrel on which the bearings are fitted.

Also, an additional problem of the known solutions is the lack of precision of the dosing devices implemented with volumetric pumps and the like. Any variations or abnormalities of supply of the lubricant or of the air-oil lubricant mixture, especially in the field of bearings for high speed, cause problems in terms of excess or lack of lubrication.

For this reason, the most highly-developed lubrication systems are controlled by optical sensors (for example the one described in DE 102006030651) placed on the piping for supply of the air-oil mixture, also known as streak sensors, which permit regulation of the flow rate of the oil or mixture which contains it. However, these known systems also have applicative limits, for example the minimum value of the dose of lubricant which can be regulated and also the maximum diametral size of the regulated piping.

In addition, the optical regulation of a streak of lubricant which moves within a transparent pipe does not really involve regulation of the flow rate of the dosed lubricant, but only a check on the functioning of the lubricant fluid supply system, i.e. whether or not the oil is present in the transport fluid (air). For example, WO2010/128380 describes a method and a device for minimal lubrication which includes the use of an optical sensor to detect an air-oil mixture within a duct, which mixture is to be conveyed to a unit to be lubricated.

Devices are also known for the micro-supply of low-viscosity fluids, such as, for example, piezoelectric micro-pumps which, although they guarantee a minimal supply of approximately 1$\mu$l/sec (microlitres/second), are not able to supply fluids of a certain viscosity, such as lubricant oils, and at pressures higher than 1 bar (0.9 bar or 90 kPa). These devices are therefore not able to supply a high pressure fluid, as is the case for a lubricant fluid which must necessarily be supplied at pressures of at least 5-6 bars and immersed in a compressed air duct which can also have a pressurisation value of 6 bars.

Furthermore, the supply pressure obtained with micro-pumps of this type is not always constant, but depends on the characteristics and counter-pressures generated in the downstream section of the air-oil lubrication supply circuit.

US 2007/0107512 describes a device for observing a flow state of a fluid (saturated or unsaturated) which flows in a translucent duct and an irradiating projection light. This unit is a semiconductor laser. When the laser passes the duct, an image pick-up unit picks up images of scattered reflected light from an axial core area of the translucent duct. This image unit provides an image of an aspect rendered through the scattering of particles having different optical properties in said axial core area. Said unit is a CCD in an embodiment of the prior invention.

CHRISTIAN ZAKIAN ET AL: "Particle sizing and flow measurement using self-mixing interferometry with a laser diode" (JOURNAL OF OPTICS. A, PURE AND APPLIED OPTICS, INSTITUTE OF PHYSICS PUBLISHING, BRISTOL, GB, vol. 7, no. 6, 13 May 2005) relates to a particle sizing and flow measurement using a self-mixing detection method based on the observation of the power spectrum of a laser diode source when scattered light from a system of moving particles is allowed to re-enter the laser cavity this prior art discloses the effect of particle size and flow rates on the intensity spectrum distribution of the source laser using a photodiode placed behind a laser crystal inside a semiconductor package; polystyrene beads of different sizes moving in a fluid (milk) have been used.

An objective of the present invention is to provide a method and a system which permit minimal lubrication of the aforementioned type which is improved in comparison with that obtained with the known methodologies, systems and devices.

In particular, an objective of the invention is to provide a system and a method for minimal lubrication which permits a continuous or repeated minimal, almost constant, lubricant dosing, (e.g. 10 µl/min or microlitres/minute) with precise, regular and laminar motion at an appropriate regulated supply pressure, i.e. which is measured with precision.

Another objective is to provide a method and a system of the aforementioned type which prevent the need to have lengthy piping for the dilution/distribution of relatively large quantities of 10 mm$^3$ (or 10 µl) dosed cyclically, but above all to guarantee the efficient measured regulation of minimal flow rates of lubricant.

Another objective of the present invention is to provide a system and a method for minimal lubrication which permit stable and continuous supply of the lubricant, independently of the variable pressure of the duct for supply of the air-oil mixture to the ball bearing to be lubricated.

A further objective of the present invention is to provide a system and a method for minimal lubrication with supply of the phases (air-oil) which can be modulated both in terms of air pressure and in terms of volume of lubricant, by means of a device for supply of lubricant which is controlled based on measurement of the flow rate of the lubricant.

Another objective of the present invention is to provide a system and a method for minimal air-oil lubrication, in particular for lubrication of ball bearings, designed to indicate automatically any deficits of lubricant or pressure in the air-oil mixture, which could cause functional abnormalities, with seizing up of the bearing to be lubricated.

These objectives and others, which will be apparent to persons skilled in the art, will be achieved by a method and a system for minimal lubrication of mechanical units according to the appended claims.

For better understanding of the present invention, purely by way of non-limiting example, the following drawings are appended, in which:

figure 1 shows a first embodiment of a system according to the invention;
figure 2 shows a second embodiment of a system according to the invention;
figure 3 shows a schematic view of part of the system in figures 1 and 2;
figure 4 shows a schematic view of the part in figure 3 during use; and
figure 5 shows a graph showing the measurements of lubricant fluid flow rate (relating to amplitude and frequency of an electrical signal generated by a self-mixing laser interferometer) when there is variation in the speed of movement of the lubricant fluid in a transport duct 3.

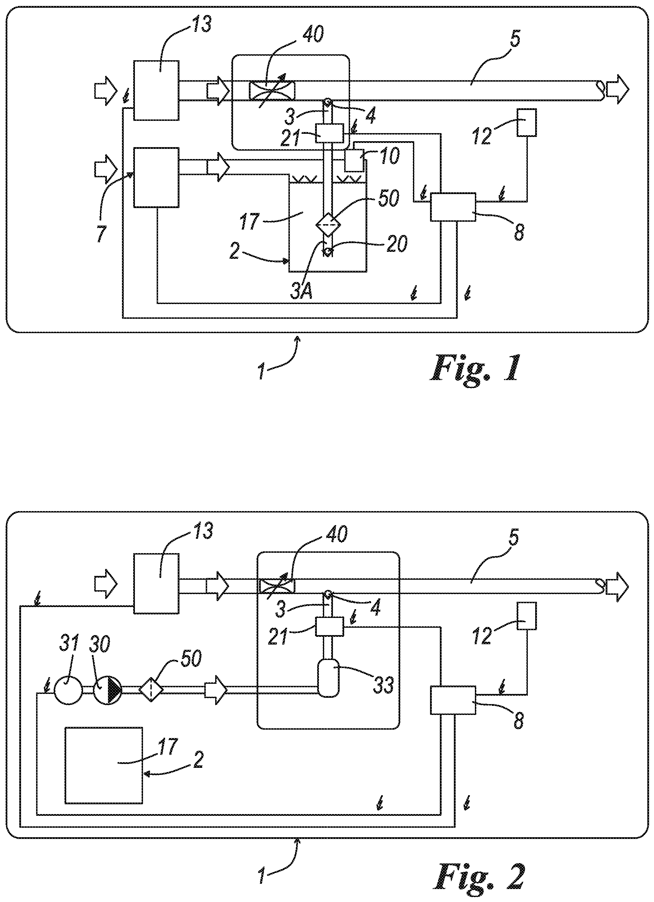

With reference to figure 1, a system according to the invention for minimal air-oil lubrication of a mechanical unit is indicated generally as 1. This system comprises a tank 2 containing a first fluid, i.e. lubricant or oil, from which there extends a first duct 3 which is connected by means of a one-way valve 4 to a second duct 5 (for mixing) in which a second, transport fluid moves; the arrangement at right-angles of the ducts 3 and 5 is purely by way of non-limiting example of the invention, as these ducts can be arranged at different angles.

The tank 2 is connected to a pressure regulator 7 which generates a pressure in the tank 2 in order to obtain a predetermined flow rate of first fluid or lubricant within the pipe 3. The pressure regulator is connected to a command and control unit 8, preferably with a microprocessor, which controls the functioning of the system 1.

This unit is also connected to a pressure sensor 10 which detects the pressure of the lubricant in the tank 2, and to a pressure sensor 12 associated with the second duct 5 downstream from the valve 4, in the direction of the motion of the second, transport fluid, which is generally air. In particular, this sensor 12 is placed along this second duct corresponding to a section of the latter in which the two fluids, i.e. oil and air, are mixed. The sensor 12 then detects the pressure in the air-oil mixture.

The second duct 5 is connected to an electronic pressure regulator 13 for the second fluid (compressed air), which is collected in any known manner from a compressed air network. The air is clearly also the element which generates the pressure on the surface 15 of the oil (indicated as 17) present in the tank 2, such as to pressurise it for its entry into the first duct 3; the end 3A of the latter which is immersed in the tank 2 is provided with one-way valves 20.

A flow sensor 21 is present on the first duct. According to the invention, this is a generating flow sensor with a laser ray which can detect the rate of flow in the duct 3 extremely accurately. This sensor 21 is connected to the unit 8, which, according to the data received from this sensor and from the sensors 10 and 12, regulates the supply of two-phase fluid to the mechanical unit accordingly.

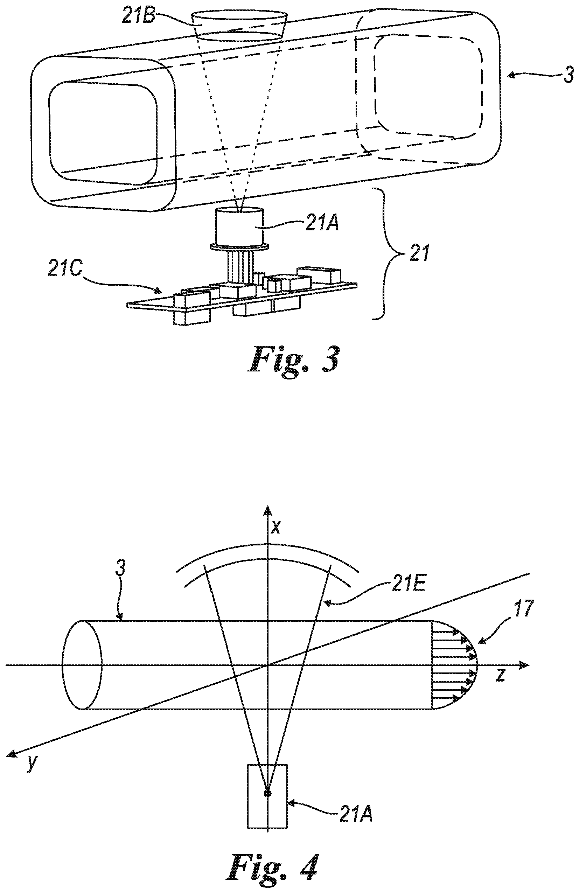

According to the invention, this sensor, or means for detecting the flow, is a known self-mixing interferometer (see figures 3 and 4). This is fitted on the duct 3, such that the source of emission 21A of the laser ray 21B is in direct contact with, or in the immediate vicinity of, the duct 3 (usually defined by a capillary tube). This position, whether it is at right-angles to the duct 3 or inclined (with variable inclination), is optimum for the control of the quantity of dosed lubricant. This source of emission is usually and preferably a laser diode.

As is known, the self-mixing interferometer is based on measurement of the disturbances induced when a small fraction of the light emitted by a semiconductor laser is backscattered from a remote target. A type of consistent revelation of the radiation takes place, by means of the laser oscillator, such that the power emitted is modulated by an interferometric wave form, which is a periodic function of the backscattered field phase $\varphi = 2ks$ : where $k = 2\pi/\lambda$ is the wave number at a set wave length $\lambda$ and s is the distance between the laser and the target.

In the case in question, the interferometric signal is revealed by means of a monitoring photodiode in an electronic circuit 21C of the sensor 21. In the voltage signal photo-generated, there is generation of an interferometric fringe whenever the target undergoes displacement equal to $\lambda/2$.

The laser diode or source of laser emission 21A is simply supported on (or placed in the immediate vicinity of) the outer surface of the duct 3 which contains the flow of oil. This avoids the use of optics, and therefore of complex alignments and assemblies, since a measurement Doppler signal 21E is generated by the natural divergence of the laser diode 21A (typically between 10° and 30°), as shown in figure 4.

The self-mixing interferometer 21A produces a type of sum of the signal contributions induced by the various diffusers in motion in the oil: in the case of viscous lubricant fluids, the diffusers are the particles of dye which are advantageously present. At the output a signal is observed, frequency development of which depends on the speed of the flow of oil.

It should be noted that in the field of minimal lubrication, a feature of the lubricant is that it is particularly clean and well-filtered (for example to 3 pm), in other words, the fluid does not contain pollutant particles or lack of uniformity or dirt, which would give rise to lack of uniformity. This is a fundamental feature for the satisfactory functioning of the system according to the invention. The maximum reliability of use and a long service life of the lubricated mechanical unit are thus guaranteed. Consequently, in order to detect the movement of the fluid, known coloured lubricants or colouring activation pigments are advantageously used.

The interferometer or sensor 21 thus permits accurate measurement of the flow of oil in the duct 3, which oil can by this means be continuously supplied (in a controlled manner) to the duct 5. This is also because of the fact that this oil moves with laminar motion (even with a minimal flow rate), and has a minimal viscosity, and thanks to its clearness, which permits determination of the coloured pigments, as well as its feature of long-term homogeneity. The feature of laminar motion characterises the use of the self-mixing interferometer as a flow measurer, since the latter carries out a superficial speed measurement, which is reliable only in the case of laminar motion. The use of dyes makes it possible to "encode" the oil, thus making the system reliable and repeatable.

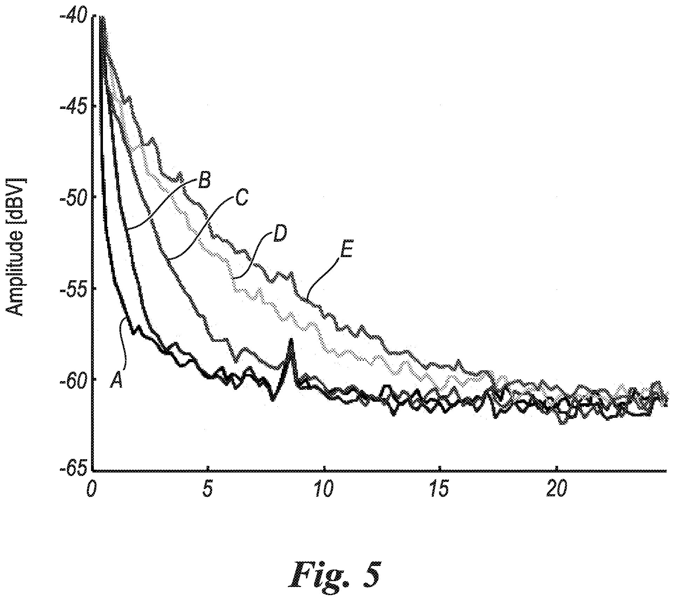

Figure 5 shows some measurements when the speed of the fluid varies. In this figure: the curve A indicates a base signal or noise, the curve B relates to a flow of 0.4 drops/s; the curve C relates to a flow of 1 drop/s; the curve D relates to a flow of 2 drops/s; the curve E relates to a flow of 3 drops/s.

According to one embodiment, on the basis of the signals in accordance with the curves in figure 5, a development algorithm has been produced according to which the unit 8 operates. By this means it evaluates a type of barycentre of the logarithmic spectrum, after having subtracted the noise base. The frequency of the barycentre is calculated as:

$$\overline{f} = \frac{\int_0^{f_{noise}} Log(S(f)) \cdot f \cdot df}{\int_0^{f_{noise}} Log(S(f))df} \cong \frac{\sum_0^{f_{noise}} Log(S(f)) \cdot f}{\sum_0^{f_{noise}} Log(S(f))}$$

where the integral extends to $f_{noise}$, corresponding to the frequency at which the signal exceeds the noise base of a pre-set threshold (for example 1 dB). To the algorithm there is added an experimental calibration coefficient which associates $\bar{f}$ with the flow, thus obtaining a measurement in real-time.

The algorithm thus provides the flow measurement directly.

By this means, by obtaining the precise value of the flow of lubricant 17 in the duct 3, it is possible to regulate the flow precisely (and continuously), whilst keeping it constant in the long term, and thus obtaining continuous lubrication of the mechanical unit.

Figure 1 also shows an air flow regulator 40 placed in the mixing duct 5. In addition, it shows a fine filter (3 $\mu$m) for the lubricant.

Figure 2, where parts corresponding to those in figure 1 are indicated with the same numerical references, shows a different embodiment of the invention. It shows the system 1 comprising the oil tank 2 connected to a pump 30, driven by its own motor 31, which thrusts the oil 17 towards a known volumetric dosing element 33, from which there extends the duct 3 where the self-mixing interferometer flow sensor 21 is positioned.

The latter is connected to the control unit 8, which, on the basis of the flow data detected by this sensor and the data detected by the pressure sensor 12, intervenes on the motor 31 of the pump 30 and on the pressure regulator 13, in order to obtain a continuous flow of lubricant to be introduced into the second, transport or air, fluid.

Figure 2 also shows an air flow regulator 40 placed in the mixing duct 5. It also shows a fine (3 $\mu$m) filter for the lubricant.

By means of the invention, it is possible to provide a minimal supply of lubricant to a mechanical unit, obtained with repeated, substantially constant dosing of lubricant (with frequency which can be modified), even in periods of time which are very close together, at a rate of at least 1-2 seconds. The lubricant moves with regular, precise laminar motion, with a predefined supply pressure, which is also regulated and controlled precisely. This permits optimum mixing of the oil (or first fluid or lubricant fluid) dosed in sufficiently small quantities in the air (or second fluid or transport fluid), without needing lengthy piping for the dilution of relatively large quantities (for example 10 mm$^3$ or 10 $\mu$l) dosed cyclically, as takes place in the solution according to the prior art.

A supply of the two-phase mixture (air-oil) is also obtained which is independent from the variable pressure present in the duct for supply of this mixture to the mechanical unit.

Descriptions have been provided of different embodiments of the invention. Others are however possible; for example, the laser sensor 21 can also be different from an interferometer or self-mixing unit, but use the same methods for detection of a fluid with stable optical properties in motion on a regular and laminar basis. These variants can also be considered to be included within the scope of the invention as defined by the appended claims.

**Claims**

1. Method for minimal lubrication of a mechanical unit in motion with a two-phase mixture, said method comprising the supply of a first liquid phase or lubricant fluid (17) within a second phase or transport fluid phase, the flow rate and/or pressure of these phases both being regulated and controlled, and the phases being supplied to said mechanical unit, as a mixture, within a mixing duct (5), said first liquid phase or lubricant fluid (17) being supplied with a repeated, constant dosing within the transport fluid phase, the flow rate of the first liquid phase or lubricant fluid within a first duct (3) being detected and regulated before this fluid reaches the mixing duct (5), which the second phase or transport fluid phase also reaches, this detection of said flow rate being obtained by means of backscattering from this lubricant fluid of a laser ray (21B) which is emitted by a laser emitter (21A) fitted on said first duct (3), to a detector unit (21), the detector unit being connected to a command and control unit (8) which controls the lubrication of the mechanical unit, the command and control unit (8) regulating the supply of the two-phase mixture to the mechanical unit, said lubricant fluid moving with laminar motion, **characterised in that** the laser ray (21B) is emitted by a self-mixing interferometer, the laser emitter (21A) being placed in contact with the first duct (3), in which the first phase or lubricant fluid (17) moves, or in the immediate vicinity of this duct.

2. Method according to claim 1, **characterised in that** the first phase or lubricant fluid is supplied from a tank (2) in which this fluid is pressurised, which tank is connected to a pressure regulator (7).

3. Method according to claim 1, **characterised in that** said first phase or lubricant fluid is obtained from a volumetric dosing element (33) which is connected to a pump (30).

4. Method according to claim 1, **characterised in that** particles of dye are introduced into the lubricant fluid (17).

**5.** System for minimal lubrication of a mechanical unit in motion with a two-phase mixture, said system comprising means for supply of a first liquid phase or lubricant fluid (17) within a second phase or transport fluid phase, means being provided for controlling the flow rate and/or pressure of these phases to said mechanical unit, as a mixture, within a mixing duct (5), means (21) being provided for laser ray detection of the mixing of the flow rate of the first liquid phase or lubricant fluid in motion within a first duct (3), before the latter is connected to a second duct or mixing duct, said detection means being connected to means (8) for control and regulation of the flow rate of this first liquid phase or lubricant fluid which can intervene on means (7, 30) for obtaining a predetermined flow rate of this first liquid phase or lubricant fluid (17) within said first duct (3), according to the flow rate of this first liquid phase detected within said first duct (3), said intervention being able to maintain this flow rate of said first liquid phase or lubricant fluid (17) constant within the first duct (3), **characterised in that** said detection means are a self-mixing interferometer (21), the latter having a laser emitter (21A) which is placed in contact with said first duct (3), said laser emitter (21A) being at right-angles to or inclined relative to said duct (3).

**6.** System according to claim 5, **characterised in that** said means for obtaining a predetermined flow rate of the first liquid phase or lubricant fluid are alternatively an electronic pressure regulator (7) or a pump.

**7.** System according to claim 5, **characterised in that** said means (8) for control and regulation are a command and control unit (8) preferably with a microprocessor.

**Patentansprüche**

**1.** Verfahren zur minimalen Schmierung einer in Bewegung befindlichen mechanischen Einheit mit einem zweiphasigen Gemisch, das Verfahren umfassend die Zufuhr einer ersten flüssigen Phase oder eines Schmiermittelfluids (17) innerhalb einer zweiten Phase oder einer Transportfluidphase, wobei sowohl die Durchflussrate als auch der Druck dieser Phasen reguliert und gesteuert werden und die Phasen innerhalb eines Mischkanals (5) als Gemisch zu der mechanischen Einheit zugeführt werden, wobei der ersten flüssigen Phase oder dem Schmiermittelfluid (17) eine wiederholte, konstante Dosierung innerhalb der Transportfluidphase zugeführt wird, wobei die Durchflussrate der ersten flüssigen Phase oder des Schmiermittelfluids innerhalb eines ersten Kanals (3) erfasst und geregelt wird, bevor dieses Fluid den Mischkanal (5) erreicht, den auch die zweite Phase oder die Transportfluidphase erreicht, wobei diese Erfassung der Durchflussrate mittels Rückstreuung eines Laserstrahls (21B), der von einem auf der ersten Kanal (3) angebrachten Laseremitter (21A) zu einer Detektoreinheit (21) emittiert wird, von diesem Schmiermittelfluid erlangt wird, wobei die Detektoreinheit mit einer Befehls- und Steuereinheit (8) verbunden ist, die die Schmierung der mechanischen Einheit steuert, wobei die Befehls- und Steuereinheit (8) die Zufuhr des zweiphasigen Gemischs zu der mechanischen Einheit regelt, wobei sich das genannte Schmiermittelfluid mit laminarer Bewegung bewegt, **dadurch gekennzeichnet, dass** der Laserstrahl (21B) von einem selbstmischenden Interferometer emittiert wird, wobei der Laseremitter (21A) in Kontakt mit dem ersten Kanal (3) platziert ist, in der sich die erste Phase oder das Schmiermittelfluid (17) bewegt, oder in unmittelbarer Nähe dieses Kanals.

**2.** Verfahren nach Anspruch 1, **dadurch gekennzeichnet, dass** die erste Phase oder das Schmiermittelfluid aus einem Behälter (2) zugeführt wird, in dem dieses Fluid unter Druck gesetzt wird, wobei der Behälter mit einem Druckregler (7) verbunden ist.

**3.** Verfahren nach Anspruch 1, **dadurch gekennzeichnet, dass** die erste Phase oder das Schmiermittelfluid von einem volumetrischen Dosierelement (33) erlangt wird, das mit einer Pumpe (30) verbunden ist.

**4.** Verfahren nach Anspruch 1, **dadurch gekennzeichnet, dass** Farbstoffpartikel in das Schmiermittelfluid (17) eingeführt werden.

**5.** System zur minimalen Schmierung einer in Bewegung befindlichen mechanischen Einheit mit einem zweiphasigen Gemisch, das System umfassend Mittel zur Zufuhr einer ersten flüssigen Phase oder eines Schmiermittelfluids (17) innerhalb einer zweiten Phase oder einer Transportfluidphase, wobei Mittel zum Steuern der Durchflussrate und/oder des Drucks dieser Phasen zu der mechanischen Einheit als Gemisch innerhalb eines Mischkanals (5) bereitgestellt sind, wobei Mittel (21) zur Laserstrahlerfassung des Gemischs der Durchflussrate der ersten flüssigen Phase oder des Schmiermittelfluids in Bewegung innerhalb eines ersten Kanals (3) bereitgestellt sind, bevor letzterer mit einem zweiten Kanal oder Mischkanal verbunden wird, wobei die Erfassungsmittel mit Mitteln (8) zur Steuerung und Regelung der Durchflussrate dieser ersten flüssigen Phase oder des Schmiermittelfluids verbunden sind, die auf Mittel (7, 30) einwirken können, um eine vorbestimmte Durchflussrate dieser ersten flüssigen Phase oder des Schmiermittelfluids (17) in dem ersten Kanal (3) entsprechend der in dem ersten Kanal (3) erfassten Durchflussrate dieser ersten flüssigen Phase zu erlangen, wobei das Einwirken in der Lage ist, diese Durchflussrate der ersten flüssigen Phase oder des Schmiermittelfluids (17) innerhalb des ersten Kanals (3) konstant zu halten, **dadurch gekennzeichnet, dass** die Erfassungsmittel ein selbstmischendes Interferometer (21) sind, wobei letzteres einen Laseremitter (21A) aufweist, der in Kontakt mit dem ersten Kanal (3) platziert ist, wobei der Laseremitter (21A) rechtwinklig oder geneigt in Bezug auf den Kanal (3) angeordnet ist.

6. System nach Anspruch 5, **dadurch gekennzeichnet, dass** die Mittel zum Erlangen einer vorbestimmten Durchflussrate der ersten flüssigen Phase oder des Schmiermittelfluids alternativ ein elektronischer Druckregler (7) oder eine Pumpe sind.

7. System nach Anspruch 5, **dadurch gekennzeichnet, dass** die Mittel (8) zur Steuerung und Regulierung eine Befehls- und Steuereinheit (8) vorzugsweise mit einem Mikroprozessor sind.

## Revendications

1. Méthode pour la lubrification minimale d'une unité mécanique en mouvement avec un mélange à deux phases, ladite méthode comprenant la fourniture d'une première phase liquide ou d'un fluide lubrifiant (17) au sein d'une seconde phase ou phase de fluide de transport, le débit et/ou la pression de ces phases étant tout deux régulés et contrôlés, et les phases étant fournies à ladite unité mécanique, en tant que mélange, au sein d'un conduit de mélange (5), ladite première phase liquide ou ledit fluide lubrifiant (17) étant fourni(e) avec un dosage constant et répété au sein de la phase de fluide de transport, le débit de la première phase liquide ou du fluide lubrifiant au sein d'un premier conduit (3) étant détecté et régulé avant que ce fluide n'atteigne le conduit de mélange (5), qui est également atteint par la seconde phase ou phase de fluide de transport, cette détection dudit débit étant obtenue au moyen de la rétrodiffusion, à partir de ce fluide lubrifiant, d'un rayon laser (21B) qui est émis par un émetteur laser (21A) fixé sur ledit premier conduit (3), vers une unité de détection (21), l'unité de détection étant connectée à une unité de commande et de contrôle (8) qui contrôle la lubrification de l'unité mécanique, l'unité de commande et de contrôle (8) régulant la fourniture du mélange à deux phases à l'unité mécanique, ledit fluide lubrifiant se déplaçant dans un mouvement laminaire, **caractérisée en ce que** le rayon laser (21B) est émis par un interféromètre à mélange automatique, l'émetteur laser (21A) étant placé en contact avec le premier conduit (3), dans lequel la première phase ou le fluide lubrifiant (17) se déplace, ou à proximité immédiate de ce conduit.

2. Méthode selon la revendication 1, **caractérisée en ce que** la première phase ou le fluide lubrifiant est fourni(e) à partir d'un réservoir (2) dans lequel ce fluide est pressurisé, ledit réservoir est connecté à un régulateur de pression (7).

3. Méthode selon la revendication 1, **caractérisée en ce que** ladite première phase ou ledit fluide lubrifiant est obtenu(e) à partir d'un élément de dosage volumétrique (33) qui est connecté à une pompe (30).

4. Méthode selon la revendication 1, **caractérisée en ce que** des particules de colorant sont introduites dans le fluide lubrifiant (17).

5. Système pour la lubrification minimale d'une unité mécanique en mouvement avec un mélange à deux phases, ledit système comprenant des moyens pour fournir une première phase liquide ou un fluide lubrifiant (17) au sein d'une seconde phase ou phase de fluide de transport, des moyens étant fournis pour contrôler le débit et/ou la pression de ces phases vers ladite unité mécanique, en tant que mélange, au sein d'un conduit de mélange (5), des moyens (21) étant fournis pour la détection du rayon laser du mélange du débit de la première phase liquide ou du fluide lubrifiant en mouvement au sein d'un premier conduit (3), avant que ce dernier ne soit connecté à un second conduit ou conduit de mélange, lesdits moyens de détection étant connectés à des moyens (8) pour le contrôle et la régulation du débit de cette première phase liquide ou de ce fluide lubrifiant qui peut intervenir sur des moyens (7, 30) pour obtenir un débit prédéterminé de cette première phase liquide ou de ce fluide lubrifiant (17) au sein dudit premier conduit (3), selon le débit de cette première phase liquide détecté au sein dudit premier conduit (3), ladite intervention étant apte à maintenir constant ce débit de ladite première phase liquide ou dudit fluide lubrifiant (17) au sein du premier conduit (3), **caractérisé en ce que** lesdits moyens de détection sont un interféromètre à mélange automatique (21), ce dernier disposant d'un émetteur laser (21A) qui est placé en contact avec ledit premier conduit (3), ledit émetteur laser (21A) étant perpendiculaire audit conduit (3) ou incliné par rapport à ce dernier.

6. Système selon la revendication 5, **caractérisé en ce que** lesdits moyens pour obtenir un débit prédéterminé de la première phase liquide ou du fluide lubrifiant sont alternativement un régulateur de pression électronique (7) ou une pompe.

7. Système selon la revendication 5, **caractérisé en ce que** lesdits moyens (8) pour le contrôle et la régulation sont une unité de commande et de contrôle (8) de préférence avec un microprocesseur.

*Fig. 1*

*Fig. 2*

**Fig. 3**

**Fig. 4**

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 102006030651
- EP 2333396 A
- WO 2010128380 A
- US 20070107512 A

### Non-patent literature cited in the description

- Particle sizing and flow measurement using self-mixing interferometry with a laser diode. **CHRISTIAN ZAKIAN et al.** JOURNAL OF OPTICS. A, PURE AND APPLIED OPTICS. INSTITUTE OF PHYSICS PUBLISHING, 13 May 2005, vol. 7